# EUROPEAN PATENT SPECIFICATION

(11) **EP 1 943 904 B1**
(45) Date of publication and mention of the grant of the patent: **04.01.2012**
(21) Application number: 08102458.0
(22) Date of filing: 13.11.2000
(51) Int. Cl.: A21C 1/14, A23G 3/02, B01F 7/04

(54) **Kneading device**
Knetvorrichtung
Dispositif pour le malaxage de boudins

(43) Date of publication of application: 16.07.2008
(62) Divisional of application: 00974877.3
(73) Proprietor: MORINAGA & CO., LTD., Tokyo 108-8403 (JP)
(72) Inventor: Kimura, Tsuguo, Kanagawa 242-0011 (JP); Masukawa, Sumio, Hyogo 659-0037 (JP); Ohno, Yoshihiro, Tokyo 108-0074 (JP); Kanai, Akishige, Hyogo 662-0934 (JP)
(74) Representative: Ilgart, Jean-Christophe

(56) References cited:
- EP-A- 0 063 171
- WO-A-95/14386
- US-A- 2 526 367
- US-A- 2 611 590
- US-A- 3 650 511
- US-A- 3 689 035

## Description

### Technical Field

The present invention relates to a kneading device which is suitable for producing confectionery such as a soft candy. In particular, the present invention relates to a kneading device which makes possible a continuous production of such confectionery.

### Background Art

Recently, soft candies are being marketed that have superior softness when initially chewed and do not adhere to the teeth. Such soft candies may be produced by, for instance, the following process:
a first step in which a saccharide, water, vegetable oil, and emulsifier are mixed and emulsified to prepare a soft candy base raw material liquid;
a second step in which the soft candy base raw material liquid is boiled down to obtain a high viscosity raw material which is used as a soft candy base;
a third step in which after mixing and boiling down sucrose, water, and glucose syrup, the mixture is cooled and crystals are precipitated to obtain a fine sucrose crystal composition;
a fourth step in which a low viscosity raw material including the fine sucrose crystal composition obtained in the third step is added to and mixed with the high viscosity raw material (the soft candy base) obtained in the second step to obtain a high viscosity mixture (i.e., a raw material mixture);
a fifth step in which saccharide, water, and foaming protein such as gelatin are mixed and whipped to obtain a frappe;
a sixth step in which a secondary raw material such as the frappe obtained in the fifth step is added to and mixed with the mixture (the raw material mixture), which is obtained in the fourth step and is used as a primary raw material, to obtain a soft candy composition in which a large amount of air is included to give a characteristic of a soft candy; and,
a seventh step in which two kinds of the soft candy compositions having different flavor are prepared in the sixth step, and they are formed into a product by wrapping one of the soft candy compositions with the other one of the soft candy compositions.

In the production process mentioned above, since it is difficult to sufficiently carry out a mixing (mulling) process and, at the same time, continuously convey the resultant mixture, especially in the fourth step in which the low viscosity raw material including the fine sucrose crystal composition is added to and mixed with the high viscosity raw material (the soft candy base) to obtain the high viscosity mixture (the raw material mixture), a batch type production process is conventionally adopted and a continuous production process is not employed.

Also, for the same reason as above, a batch type production process is adapted for the sixth step in which the secondary raw material such as the frappe is added to and mixed with the mixture (the raw material mixture) to obtain a soft candy composition, and a continuous production process is not utilized.

Moreover, in the seventh step in which one of the materials is wrapped up by the other to be formed into a product, a method is adopted in which an extrusion instrument, for instance, an extruder, is used and the nozzle thereof is made duplex to form the product, or in which the product is prepared by hand.

However, since the raw material to be mixed (mulled) deteriorates over time and the physical properties of the products differ at the initial production stage and at the final production stage if the batch type production process is employed for the above-mentioned fourth or sixth step, it becomes necessary to adjust the conditions such as temperature or time in the subsequent steps in order to eliminate the effect of the difference over time. Accordingly, production control becomes complicated, and this is one of the factors which reduces productivity.

In order to solve the above problems, although attempts have been made and experiments have been conducted to prepare a product by using a kneading device such as a single axial or twin axial extruder or onrator, a desired kneaded material could not be obtained due to such factors as heat generated during the kneading process. That is, the characteristics of soft candy which has superior softness when initially chewed and which is resistant to adhering to the teeth is obtained mainly in the above-mentioned sixth step, and in the fourth step in which a large quantity of air is incorporated into the mixture. However, in the above-mentioned kneading device, the amount of air incorporated into the mixture becomes insufficient due to such factors as heat generated in the mixing process, and as a result, a mixture having desired properties cannot be obtained.

Also, as for the above-mentioned seventh step, if the method is employed in which an extrusion instrument such as an extruder is used and the nozzle thereof is made duplex to form the product, there are certain limits in the working conditions: for instance, if a raw material is used whose content of fats and oils is, for example, 8% or more, it generates oil stains. Moreover, if the method in which the product is manually prepared is employed, the wrapping amount of the product, and hence, the quality of the product may differ from one product to another. Accordingly, it is not suitable for use in a continuous production process.

The present invention takes into consideration the above-mentioned circumstances, with the object of providing a kneading device which makes possible the introduction of air into the mixture and the continuous conveyance of the mixture while a mixing process is being carried out.

### Disclosure of the Invention

WO-A-95/14386 discloses a kneading device according to the first part of claim 1, but which is devoid of any means for adjusting the inclination of the mixing blades and therefore the transfer speed of the material through the device.

The kneading device as set forth in claim 1 is a kneading device which kneads a main raw material of high viscosity and a secondary raw material of liquid or powder and continuously delivers a kneaded raw material obtained, including: a casing having an opened upper portion; a pair of mixing blades disposed parallel to each other in the casing; and, a driving unit for rotating the mixing blades, wherein each of the pair of mixing blades comprises a unit blade of a U-shape continuously attached in a wavy shape, and the pair of the mixing blades rotate with their rotational phases shifted so that they do not interfere with each other, and
an inclined portion facing the other end of the mixing blades is provided with the surface of the mixing blades facing the rotation direction thereof so that the raw materials may be conveyed from one end of the mixing blades to the other end thereof, and the device is characterised by an inclination member for changing the angle of inclination of the inclined portion which is detachably attached to the inclined portion.

The kneading device as set forth in claim 2 is a kneading device according to claim 1 wherein each of the pair of mixing blades is configured so as to rotate inwardly from top to bottom.

### Brief Description of Drawings

FIG. 1 is a plan view showing a schematic structure of an embodiment of a kneading device as set forth in claim 1 of the present invention.
FIG. 2 is a side view showing a schematic structure of a main portion of the kneading device shown in FIG. 1.

Next, an embodiment of the kneading device according to claim 10 of the present invention will be explained.

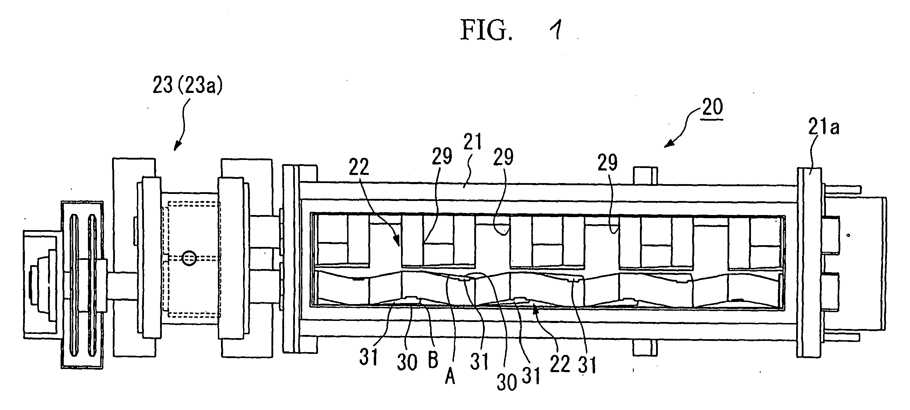

FIG. 1 is a diagram showing a schematic structure of the kneading device according to claim 10, and the kneading device is indicated by the numeral 20 in FIG. 1. The kneading device 20, may be suitably used especially for the production of the above-mentioned soft candy. The kneading device 20 may be used, for instance, for adding liquid or powdered secondary raw materials, such as frappe, food flavorings, food color, or acids, to a main material which is a mixture (the raw material mixture) obtained by using an, then kneading device in the above-mentioned sixth step, and for mixing (kneading) the two materials to produce a kneaded material which may be used as a soft candy material containing a large quantity of air. Also, the kneading device 20 may be used for continuously conveying the soft candy material.

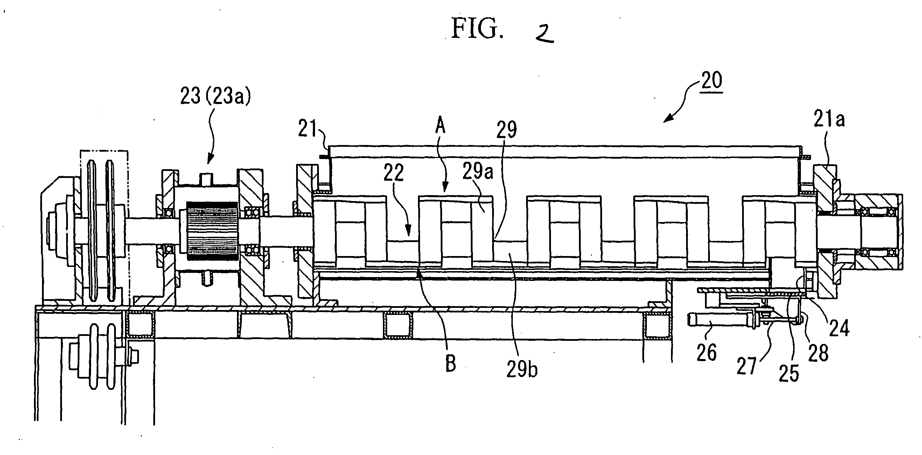

The kneading device 20 includes a casing 21 whose upper portion is opened, a pair of mixing blade 22 which is disposed in the casing 21 so that the blades are parallel to each other, and a driving unit 23 for rotating the mixing blades 22. The casing 21 is of a rectangular parallelopiped having a rectangular plan view, and it has an opened upper portion and an outlet 24 at a bottom face of the downstream side, the side for discharging the kneaded material obtained by kneading the above-mentioned main raw material and the secondary raw materials as shown in FIG. 2.

The outlet 24 is formed by an opening penetrating the casing 22, and a shutter 25 which covers the outside, i.e., the downside, opening of the outlet in an openable - closable manner. The shutter 25 is attached to a piston 27 of an air-cylinder 26, which is attached to the casing 22, via a bracket 28. The shutter 25 opens and closes the outlet 24 in accordance with the actuation of the air-cylinder 26.

Each of the mixing blades 22 and 22 is formed by a unit blade 29 having a U-shape which are continuously attached so as to form wavy shape and, as shown in FIG. 1, the mixing blades 22 and 22 are disposed along the longer side of the above-mentioned casing 21 in a manner parallel to each other. An end portion (the upper streamside) of these mixing blades 22 and 22 is coupled to the above-mentioned driving unit 23 and the other end (the downstream side) thereof is rotatably supported by a side plate 21a of the casing 21. Also, although not particularly limited thereto, these mixing blades 22 and 22 are configured so that they rotate inwardly from top to bottom in this embodiment and that each raw material is introduced/supplied between the mixing blades 22 and 22. In this embodiment, these mixing blades 22 and 22 rotate with their rotation phases being shifted so that the unit blades 29 thereof do not interfere with each other. That is, the timing of rotation of the mixing blades 22 and 22 is determined so that when one of the mixing blades 22 is in horizontal position with its unit blades 29 facing the widthwise direction, the other one of the mixing blades 22 is in a vertical position with its unit blades 29 facing the lengthwise direction.

Also, as mentioned above, the mixing blade 22 is formed by the unit blade 29 having a U-shape which is continuously attached so as to form a wavy shape, and a longitudinal bar 29a and a lateral bar 29b are disposed so as to be alternately connected. In order to convey the above-mentioned raw material from one end of the mixing blade 22 to the other end, an inclined portion 30 facing the other end of the mixing blade 22 is provided with the surface of the lateral bar 29a facing the rotation direction of the mixing blade 22.

That is, when the lateral bar 29b is in the position indicated by the letter A in FIG. 1 (i.e., the upper side position indicated by the letter A in FIG. 2), the portion A rotates inwardly, and hence, the surface of the inclined portion 30 of the portion A, which faces the other end of the mixing blade 22, faces the inside of the rotation direction as shown in FIG. 1. On the other hand, when the lateral bar 29b is in the position indicated by the letter B in FIG. 1 (i.e., the lower side position indicated by the letter B in FIG. 2), the portion B rotates outside, and hence, the surface of the inclined portion 30 of the portion B, which faces the other end of the mixing blade 22, faces the outside of the rotation direction as shown in FIG. 1.

The above-mentioned inclined portion 30 has a relatively large angle of inclination of, for instance, about 5 - 15° and, with this angle of inclination, the raw materials supplied are conveyed towards the other end of the mixing blade 22, i.e., the outlet 24 side while being kneaded. Also, an inclination member 31 for changing the inclination angle of the inclined portion 30 is detachably attached to the inclined portion 30 by a fixing member (not shown in the figures) such as a bolt. The inclination member 31 is formed as a wedge shape so as to decrease the inclination angle of the inclined portion 30 in order to prolong the residence time of the raw material, especially by reducing the conveying speed thereof in accordance with the characteristics of the raw material. Note that it is possible to attach the inclination member 31 having a different inclination angle to each position of the inclined portion 30 in order to suitably adjust the conveying speed of the raw material in accordance with the position in the casing 21.

The driving unit 23, as mentioned above, is used to support one end (the upstream side) of the mixing blades 22 and 22 and to rotate them in that state, and has a known, conventional structure including a motor (not shown in the figures), and a transmittance means 23a which transmits the rotary force of the motor to the mixing blades 22 and 22.

Also, in the kneading device 20, since the casing 21 is formed so that the upper portion thereof is openable, the main material and the secondary raw materials may be introduced therein from anywhere at the opened upper portion, i.e., the upper opening side. Accordingly, the introduction position may be suitably selected in accordance with such factors as the properties of each of the raw materials.

In order to mix and knead the main raw material which includes the mixture (the raw material mixture) obtained by using another kneading device with the secondary raw materials such as frappe, flavor, food color, or food acid by using the kneading device 20 having the above-mentioned structure, first of all, the inclination member 31 is attached to each inclined portion 30 of the mixing blades 22, if necessary, and the conveying rate of the raw materials, i.e., the residence time for the raw materials, is appropriately determined prior to the kneading process. Also, the position for introducing the main raw material and the secondary raw materials, respectively, is predetermined based on such factors as the properties of the raw materials. In this embodiment, the main raw material is introduced into the most upstream side of the upper opening of the casing 21, i.e., between the mixing blades 22 and 22 at the driving unit 23 side, and the flavorings, the food color, the food acid, and the frappe may be introduced, in that order, from the upstream side to the downstream side.

After the above-mentioned preparatory step, the shutter 25 of the casing 21 is closed and the mixing blades 22 and 22 are rotated at a predetermined rotating speed. Then, in this state, the main raw material and each of the secondary raw materials are continuously introduced/supplied from the predetermined introduction position.

Then, the main raw material and the secondary raw materials, which are introduced between the mixing blades 22 and 22 rotating inwardly, are conveyed towards the outlet 24 side by the inclined portion 30 while being pressed and kneaded between the mixing blades 22 and 22.

At that time, since each lateral bar 29b of the pair of mixing blades 22 and 22 rotates at a large radius, it plays a role in significantly elongating the raw materials being kneaded. Accordingly, the lateral bar 29b, in particular, makes the raw materials change into a so-called "pulling candy state" by significantly elongating the raw materials so that an aeration effect is exerted by which a sufficient amount of air is incorporated into the raw materials. Note that the effect of the aeration is significantly improved since the upper portion of the casing 21 is opened so that the inside of the casing 21 is always filled by air and the raw materials make contact with the air.

The raw materials in which air is incorporated and which are kneaded in the manner mentioned above, are conveyed while their degree of kneading (mixing) is enhanced by the mixing blades 22 and 22. That is, as mentioned above, since the inclined portion 30 is provided with each of the lateral bars 29b, the raw materials are conveyed towards the outlet 24 side by being pressed against the inclined portion 30 by the rotation of the mixing blades 22 and 22 and are pushed towards the downstream side.

In this manner, the raw materials are gradually conveyed towards the downstream side. When the raw material at the front is conveyed to the side plate 2 1 a side (the outlet 24 side) of the casing 21 and a predetermined amount of the raw materials, i.e., the raw material mixture including the sufficiently kneaded main raw material and secondary raw materials, is collected, the shutter 25 is opened by actuating the above-mentioned air-cylinder 26. Then, the raw material mixture collected at the side plate 21 a side drops into the outlet 24 disposed below by their weight, etc. The dropped raw materials are continuously conveyed by a belt conveyer (not shown in the figures) which is placed below the outlet 24 to the subsequent process.

Note that although the shutter 25 is initially closed in order to collect the predetermined amount of the raw material mixture, it is opened until the kneading process is completed after the predetermined amount of the raw material mixture is once collected and discharged. In this manner, a desired amount of the raw materials may be continuously kneaded and sent to the subsequent process.

In the above-mentioned kneading device 20, since the mixing blades 22 and 22 have the structure in which the U-shaped unit blades 29 are continuously attached in a wavy shape and these mixing blades 22 and 22 rotate with their rotation phase shifted so that they do not interfere with each other, it becomes possible to significantly elongate the raw materials being kneaded by, in particular, each of the lateral bars 29 of the mixing blades 22 and 22 which rotates at a large radius.

Also, since the upper portion of the casing 21 is open, the raw materials may be continuously in contact with air by filling the inside of the casing 21 with air. Accordingly, the aeration effect may further be improved. Moreover, since the upper portion of the casing 21 is open, the introduction position for the raw materials may be arbitrary determined. Accordingly, if the type of product produced is changed and the main raw material or the secondary raw materials are also substituted by other types of raw materials, and therefore, the properties such as viscosity of the raw materials are changed, it is possible to readily make an adjustment so that the residence time in the kneading device 20 or the mixing time with the other material is changed. Furthermore, since the upper portion of the casing 21 is open, it is easy to wash the inside thereof. Accordingly, it becomes possible to respond to, for instance, changes in type of products, readily and quickly.

In addition, since the inclined portion 30 is provided with the mixing blades 22 and 22, it becomes possible to transfer the raw materials towards the outlet 24 side while it is kneaded and to discharge the kneaded raw materials from the outlet 24 by simply rotating the mixing blades 22 and 22.

Also, since the inclination member 31, which changes the inclination angle of the inclined portion 30, is detachably attached to the inclined portion 30, it is possible to suitably set or change the conveying speed for the raw materials, i.e., the residence time of the raw materials. Accordingly, it becomes possible to select the conveying speed and the residence time which is most suitable for the combination of the main material and the secondary raw materials used.

The kneading device as set forth in claim 1 of the invention is a kneading device in which each of the pair of mixing blades includes a unit blade of a U-shape continuously attached in a wavy shape, and the pair of the mixing blades rotate with their rotational phases shifted so that they do not interfere with each other. Accordingly, it becomes possible to significantly elongate the raw materials being kneaded by, in particular, each of lateral bars of the mixing blades which rotates at a large radius, and an aeration effect is exerted by which a sufficient amount of air is incorporated into the raw materials. Also, since the upper portion of the casing is open, the raw materials may be continuously in contact with air by filling the inside of the casing with air. Accordingly, the aeration effect may further be improved. Moreover, since the upper portion of the casing is open, the introduction position for the raw materials may be arbitrary determined. Accordingly, if the type of product produced is changed and the main raw material or the secondary raw materials are also substituted by other types of raw materials, and therefore, the properties such as viscosity of the raw materials are changed, it is possible to readily make an adjustment so that the residence time in the kneading device or the mixing time with the other material is changed. Furthermore, since the upper portion of the casing is open, it is easy to wash the inside thereof. Accordingly, it becomes possible to respond to, for instance, changes in type of products, readily and quickly.

An inclined portion is provided with the mixing blades. Accordingly, the raw materials may be conveyed from one end of the mixing blades to the other end thereof while being kneaded by simply rotating the mixing blades.

An inclination member for changing the angle of inclination of the inclined portion is detachably attached to the inclined portion. Accordingly, it is possible to suitably set or change the conveying speed for the raw materials, i.e., the residence time of the raw materials. Therefore, it becomes possible to select the conveying speed and the residence time which is most suitable for the combination of the main material and the secondary raw materials used.

The kneading device as set forth in claim 2 is a kneading device in which each of the pair of mixing blades is configured so as to rotate inwardly from top to bottom. Accordingly, the kneading effect and the aeration effect by the mixing blades may further be improved.

The ropesizer as set forth in claim 16 is a ropesizer in which the extrusion portion of the delivering unit is formed by the plurality of cone members, which rotate at the same time they revolve, it becomes possible to extrude the raw material from the outlet thereof in lace shape without applying an excessive pressure to the raw materials, and accordingly, even if the oil and fat content of the raw material is high, it is not affected by the applied pressure, and an excellent extruding operation onto the sheet shape first raw material becomes possible.

The ropesizer as set forth in claim 17 is a ropesizer in which the elongation unit is provided with a conveyance passage. Accordingly, it becomes possible to achieve stress relaxation in the intermediate product having smaller diameter, which has been elongated, in order to stabilize a predetermined cross section and the length of the intermediate product having smaller diameter so that the shape of the product when it is cut may be stabilized.

## Claims

1. A kneading device which kneads a main raw material of high viscosity and a secondary raw material of liquid or powder and continuously delivers a kneaded raw material obtained, comprising:
a casing (21) having an opened upper portion;
a pair of mixing blades (22) disposed parallel to each other in said casing; and,
a driving unit (23) for raotating said mixing blades, wherein
each of said pair of mixing blades comprises a unit blade (29) of a U-shape continuously attached in a wavy shape, and said pair of the mixing blades rotate with their rotational phases shifted so that they no not interfere with each other, and
an inclined portion (30) facing the other end of said mixing blades is provided with the surface of said mixing blades facing the rotation direction thereof so that said raw materials may be conveyed from one end of said mixing blades to the other end therof, and **characterised in that** an inclination member (31) for changing the angle of inclination of said inclined portion is detachably attached to said inclined portion.

2. A kneading device according to claim 1, wherein each of said pair of mixing blades is configured so as to rotate inwardly from top to bottom.

## Patentansprüche

1. Knetvorrichtung, die ein Haupt-Rohmaterial hoher Viskosität und ein sekundäres Rohmaterial aus Flüssigkeit oder Pulver knetet und kontinuierlich ein erhaltenes geknetetes Rohmaterial liefert, umfassend:
ein Gehäuse (21), das einen offenen oberen Bereich aufweist;
ein Paar Mischblätter (22), die in dem Gehäuse parallel zueinander angeordnet sind; und
eine Antriebseinheit (23) zum Rotieren der Mischblätter, wobei
jedes Paar von Mischblättern eine U-förmige Blatt-Baugruppe (29) umfaßt, die kontinuierlich in einer Wellenform angeordnet ist, und das Paar von Mischblättern so rotiert, dass ihre Rotationsphasen versetzt sind, so dass sie einander nicht behindern, und
ein geneigter Bereich (30), der dem anderen Ende der Mischblätter gegenüberliegt, so vorgesehen ist, dass die Oberfläche der Mischblätter der Rotationsrichtung derselben so gegenüberliegt, dass die Rohmaterialien vom einen Ende der Mischblätter zum anderen Ende derselben befördert werden können, und der **dadurch gekennzeichnet ist, dass** ein Neigungselement (31) zum Ändern des Neigungswinkels des geneigten Bereichs abnehmbar am geneigten Bereich angebracht ist.

2. Knetvorrichtung nach Anspruch 1, wobei jedes Paar von Mischblättern so konfiguriert ist, dass es von oben nach unten einwärts rotiert.

## Revendications

1. Dispositif de pétrissage qui pétrit une matière première principale de haute viscosité et une matière première secondaire de liquide ou de poudre et délivre de manière continue une matière première pétrie obtenue, comprenant :
un boîtier (21) ayant une partie supérieure ouverte ;
une paire de pales de mélange (22) disposées parallèlement entre elles dans ledit boîtier ; et
une unité d'entraînement (23) pour faire tourner lesdites pales de mélange, dans lequel :
chacune de ladite paire de pales de mélange comprend une pale unitaire (29) en forme de U, fixée de manière continue selon une forme ondulée, ladite paire de pales de mélange tourne avec leurs phases de rotation décalées de sorte qu'elles n'interfèrent pas entre elles, et
une partie inclinée (30), faisant face à l'autre extrémité desdites pales de mélange, est prévue à la surface desdites pales de mélange en faisant face à leur direction de rotation de sorte que lesdites matières premières peuvent être transportées d'une extrémité desdites pales de mélange à l'autre, et **caractérisé en ce qu'**un élément d'inclinaison (31) pour changer l'angle d'inclinaison de ladite partie inclinée est fixé de manière détachable à ladite partie inclinée.

2. Dispositif de pétrissage selon la revendication 1, dans lequel chacune de ladite paire de pales de mélange est configurée afin de tourner vers l'intérieur de haut en bas.
